# EUROPEAN PATENT SPECIFICATION

(11) **EP 3 909 726 B1**
(45) Date of publication and mention of the grant of the patent: **22.04.2026**
(21) Application number: 19909309.7
(22) Date of filing: 11.01.2019
(51) Int. Cl.: B25J 19/06, B25J 9/16

(54) **CONTROL DEVICE, WORKPIECE WORKING APPARATUS, WORKPIECE WORKING SYSTEM, AND CONTROL METHOD**
STEUERVORRICHTUNG, WERKSTÜCKBEARBEITUNGSGERÄT, WERKSTÜCKBEARBEITUNGSSYSTEM UND STEUERVERFAHREN
DISPOSITIF DE COMMANDE, APPAREIL DE TRAVAIL DE PIÈCE, SYSTÈME DE TRAVAIL DE PIÈCE ET PROCÉDÉ DE COMMANDE

(43) Date of publication of application: 17.11.2021
(73) Proprietor: Fuji Corporation, Chiryu-shi, Aichi 472-8686 (JP)
(72) Inventor: HIRANO, Atsunori, Chiryu-shi, Aichi 472-8686 (JP)
(74) Representative: Grünecker Patent- und Rechtsanwälte PartG mbB
(86) International application number: PCT/JP2019/000703
(87) International publication number: WO 2020/144852

(56) References cited:
- EP-B1- 2 395 274
- EP-B1- 2 395 274
- WO-A1-2014/008929
- WO-A1-2018/131237
- JP-A- 2006 043 861
- JP-A- 2010 120 139
- JP-A- 2012 130 986
- JP-A- 2013 545 625
- JP-A- 2014 176 932
- JP-A- 2016 193 473
- JP-A- 2017 080 845
- US-A1- 2013 338 829
- EVERETT H R: "SURVEY OF COLLISION AVOIDANCE AND RANGING SENSORS FOR MOBILE ROBOTS", ROBOTICS AND AUTONOMOUS SYSTEMS, ELSEVIER BV, AMSTERDAM, NL, vol. 58, no. 1, 1 May 1989 (1989-05-01), pages 5 - 67, XP000113868, ISSN: 0921-8890, DOI: 10.1016/0921-8890(89)90041-9

## Description

### Technical Field

The present description discloses a control device, a workpiece working apparatus, a workpiece working system, and a control method.

### Background Art

In the related art, as a workpiece working apparatus having a robot arm, for example, there have been proposed a workpiece working apparatus which has a first region in the vicinity of the apparatus and a second region outside the first region, such that in a case of a person being detected in the second region, the operation of the robot is restricted, while the person is detected in the first region, the operation of the robot is restricted (see, for example, Patent Literature 1). This apparatus is configured to be capable of performing appropriate control by striking a balance between safety and efficiency.
Patent Application US 2013/0338829 A1 relates to control of safety operation of a robot, equipped with sensors having different recording ranges and connected to a control device for collision detection. The recording ranges extend outside the robot.
The article by H.R. Everett, "Survey of Collision Avoidance and Ranging Sensors for Mobile Robots", Robotics and Autonomous Systems, vo. 58, no. 1 May 1, 1989 discusses systems for collision avoidance for mobile robots, along with the sensors used for detecting distance and speed. In particular, the use of electromagnet waves is discussed for distance and speed detection (Doppler shift), including RADAR in different wavelength ranges (microwave, millimeter).
Patent Application EP 2 395 274 B1 relates to industrial control of e.g. robots and in particular, to the control of safety zone ranges around the robot, employing time-of-flight (TOF) techniques to detect distance and speed of an object approaching the robot. If an object moves fast/slowly toward the robot, the safety zone is reduced/extended, and the robot is operated in a respective mode for each zone.

### Patent Literature

Patent Literature 1: JP-A-2018-126818

### Summary of the Invention

### Technical Problem

However, in the apparatus of Patent Literature 1, although the balance between the safety and the efficiency is considered, there is still a demand for further improvement because of its insufficient operational restriction.

The present disclosure has been made in view of such problems, and is to provide a control device, a workpiece working apparatus, a workpiece working system, and a control method capable of performing more appropriate control compatible with both the safety and the efficiency.

### Solution to Problem

The present disclosure employs the following means in order to achieve the main object described above.

The above object is achieved by present invention defined by the features of the independent claims, with preferred embodiments being specified in the dependent claims. References to embodiments which do not fall under the scope of the claims are to be understood as examples useful for understanding the invention.

In the control device, the executing mode of the working section is set based on the distance information between the moving object (for example, operator) that is present outside the workpiece working apparatus and the working section and the speed information of the moving object which moves toward the working section, which are acquired from the radio wave sensor. That is, in this device, the operation mode of the working section is set also in consideration of the speed of the moving object. For example, in a case in which the speed of the moving object is low, there may be time until the moving object contacts the working section, whereas in a case in which the speed is high, there may be no time until the moving object contacts the working section. Here, the operation mode is set in consideration of such a speed, and thus more appropriate control compatible with both the safety and the efficiency can be performed. Here, the "working section" may be, for example, an articulated arm provided in the arm robot serving as the workpiece working apparatus, or may be a conveyance section that takes in and out a conveyed object, which is provided in an automated guided vehicle which serves as the workpiece working apparatus.

### Brief Description of Drawings

Fig. 1 is a schematic explanatory diagram showing an example of workpiece working system 10.
Fig. 2 is an explanatory diagram showing an example of a type of a signal output from radio wave sensor 25.
Fig. 3 is an explanatory diagram of information memorized in memory section 33.
Fig. 4 is a schematic explanatory diagram of output pattern 1 of radio wave sensor 25.
Fig. 5 is a schematic explanatory diagram of output pattern 2 of radio wave sensor 25.
Fig. 6 is a schematic explanatory diagram of output pattern 3 of radio wave sensor 25.
Fig. 7 is a schematic explanatory diagram of output pattern 4 of radio wave sensor 25.
Fig. 8 is a flowchart showing an example of an operation execution routine.

### Description of Embodiments

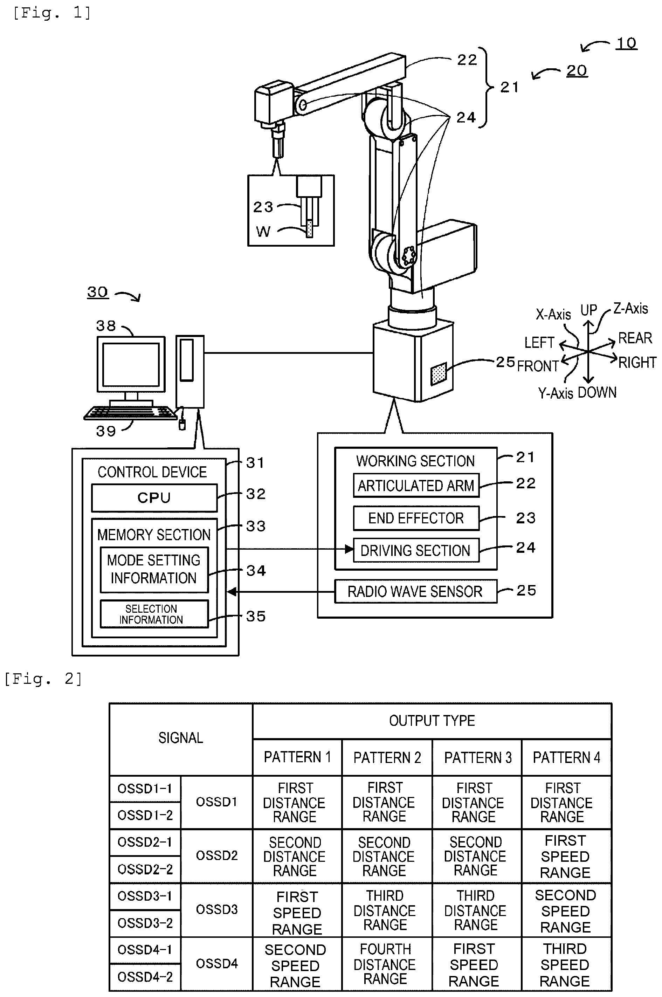

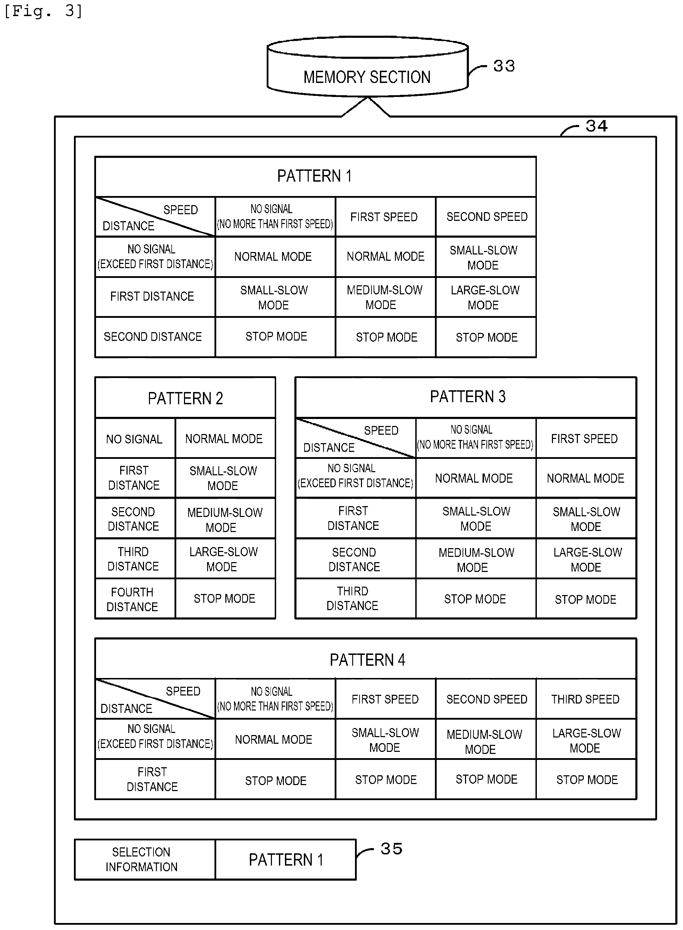

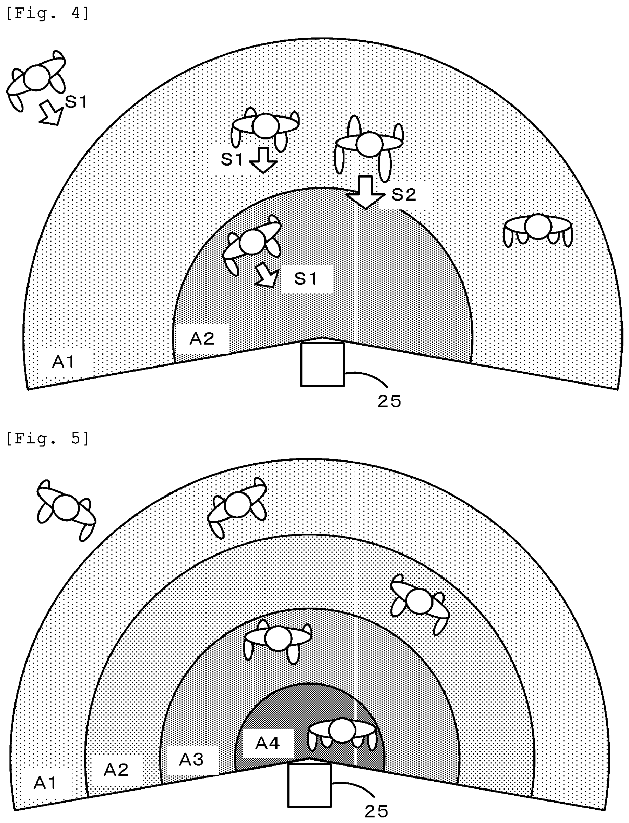

An embodiment of workpiece working system 10 disclosed in the present description will be described below with reference to the drawings. Fig. 1 is a schematic explanatory diagram showing an example of workpiece working system 10. Fig. 2 is an explanatory diagram showing an example of a type of a signal output from radio wave sensor 25. Fig. 3 is an explanatory diagram of mode setting information 34 and selection information 35 which are memorized in memory section 33. Figs. 4 to 7 are schematic explanatory diagrams of output patterns 1 to 4 of radio wave sensor 25. Workpiece working system 10 is configured to include one or more workpiece working apparatuses 20 that perform a predetermined work on an article that is a working target (workpiece W). Workpiece working system 10 includes workpiece working apparatus 20 and control PC 30. It should be noted that workpiece working apparatus 20 does not have a specific direction to be fixed in order to be movable in all directions, but for convenience of description, the directions shown in Fig. 1 will be described as the right-left direction (X-axis), the front-rear direction (Y-axis), and the up-down direction (Z-axis).

Workpiece working apparatus 20 is configured as an apparatus that executes a predetermined work on workpiece W that is a working target. Examples of workpiece W include various components such as a mechanical component, an electrical component, an electronic component, and a chemical component, as well as foods, biotechnology, and biological-related articles. Examples of the predetermined work include, for example, a moving work of performing picking up, moving, and disposing from a pick-up position to a disposition position, an assembling work of assembling a component, a processing work of performing processing, an application work of applying the viscous material, heating work of heating, a processing work of performing predetermined chemical and/or physical processing, and an inspection work of performing inspection. The assembling work includes, for example, a fastening work of fastening members such as a screw and a bolt, an insertion work of a connector, a handling work relating to wiring, a component fitting work, a member attachment work, a pressing work of pressing a workpiece, or the like. Examples of the processing work include a grinding work, a cutting work, a deformation work, a connection work, a joining work, or the like. Examples of the viscous material include an adhesive, a solder paste, grease, or the like. The inspection work includes, for example, a work of inspecting one or more of the results of the works described above, and may be accompanied by the moving work of workpiece W.

Workpiece working apparatus 20 includes working section 21 and radio wave sensor 25, and is configured as an articulated arm robot. Working section 21 includes articulated arm 22, end effector 23, and driving section 24. Articulated arm 22 has a first arm and a second arm. End effector 23 is a member that performs a predetermined work on workpiece W, and is pivotably connected to a distal end of articulated arm 22. End effector 23 is a working member that grips and picks up workpiece W. Driving section 24 pivots and drives each arm and drives end effector 23 to be opened and closed.

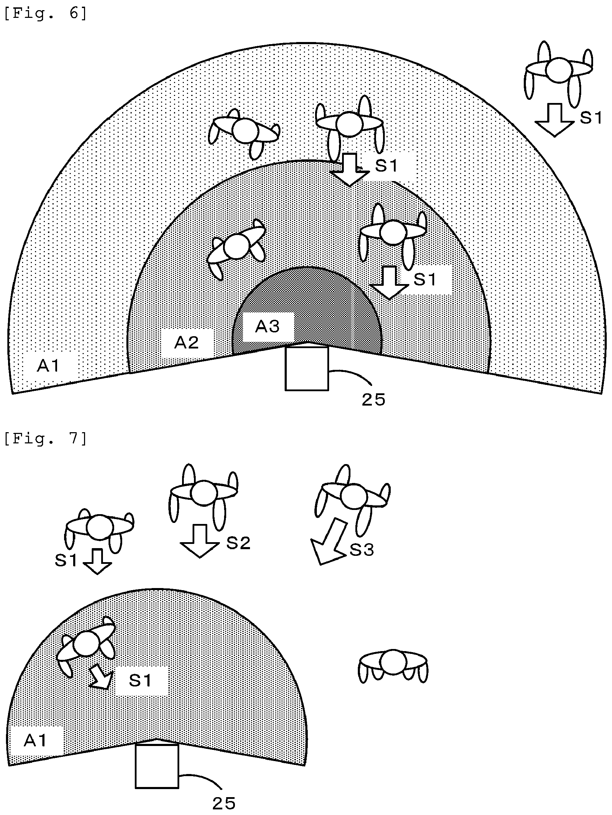

Radio wave sensor 25 is configured as a non-contact type sensor capable of outputting distance information regarding the distance to a moving object which moves in a detectable region and speed information regarding the speed. Radio wave sensor 25 detects a presence position of the target object by transmitting a radio wave and receiving the radio wave reflected from the target object, and detects the moving speed based on the change in frequency generated between the transmitted wave and the reflected wave. As shown in Fig. 2, in radio wave sensor 25, for example, patterns 1 to 4 are set as patterns of signals for output the detected result to control device 31. Pattern 1 is a setting for outputting two channels of distance and two channels of speed. **In** pattern 1, the signal of OSSD1 is output in a case in which the moving object is present in first distance range A1, and the signal of OSSD2 is output in a case in which the moving object is present in second distance range A2 shorter than first distance range A1 (see Fig. 4). **In** pattern 1, the signal of OSSD3 is output in a case in which the moving object moves in first speed range S1 toward radio wave sensor 25, and the signal of OSSD4 is output in a case in which the moving object moves in second speed range S2 faster than first speed range S1. For example, in pattern 1, first distance range A1 may be more than 2 m and less than 5 m, second distance range A2 may be no more than 2 m, first speed range S1 may be more than 0.1 m/s and no more than 0.5 m/s, and second speed range S2 may be 0.5 m/s or more. Pattern 2 is a setting for outputting four channels of distance. In pattern 2, the signal of OSSD1 is output in a case in which the moving object is present in first distance range A1, the signal of OSSD2 is output in a case in which the moving object is present in second distance range A2 shorter than first distance range A1, the signal of OSSD3 is output in a case in which the moving object is present in third distance range A3 shorter than second distance range A2, and the signal of OSSD4 is output in a case in which the moving object is present in fourth distance range A4 shorter than third distance range A3 (see Fig. 5). For example, in pattern 2, first distance range A1 may be more than 4 m and less than 5 m, second distance range A2 may be more than 3 m and no more than 4 m, third distance range A3 may be more than 2 m and no more than 3 m, and fourth distance range A4 may be no more than 2 m. Pattern 3 is a setting for outputting three channels of distance and one channel of speed. In pattern 3, the signal of OSSD1 is output in a case in which the moving object is present in first distance range A1, the signal of OSSD2 is output in a case in which the moving object is present in second distance range A2 shorter than first distance range A1, and the signal of OSSD3 is output in a case in which the moving object is present in third distance range A3 shorter than second distance range A2 (see Fig. 6). In pattern 3, the signal of OSSD4 is output in a case in which the moving object moves in first speed range S1 toward radio wave sensor 25. For example, in pattern 3, first distance range A1 may be more than 4 m and less than 6 m, second distance range A2 may be more than 2 m and no more than 4 m, third distance range A3 may be no more than 2 m, and first speed range S1 may be 0.3 m/s or more. Pattern 4 is a setting for outputting one channel of distance and three channels of speed. In pattern 4, the signal of OSSD1 is output in a case in which the moving object is present in first distance range A1 (see Fig. 7). In pattern 4, the signal of OSSD2 is output in a case in which the moving object moves in first speed range S1 toward radio wave sensor 25, the signal of OSSD3 is output in a case in which the moving object moves in second speed range S2 faster than first speed range S1, and the signal of OSSD4 is output in a case in which the moving object moves in third speed range S3 faster than second speed range S2. For example, in pattern 4, first distance range A1 may be no more than 3 m, first speed range S1 may be more than 0.1 m/s and no more than 0.3 m/s, second speed range S2 may be more than 0.3 m/s and no more than 0.5 m/s, and third distance range A3 may be 0.5 m/s or more. Each of first to fourth distance ranges A1 to A4 of patterns 1 to 4 may be set to the same range or may be set to different ranges. Similarly, each of first to third speed ranges S1 to S3 of patterns 1 to 4 may be set to the same range or may be set to different ranges.

Control PC 30 is a computer that controls entire workpiece working apparatus 20. Control PC 30 includes control device 31, display section 38, and input device 39. Control device 31 includes CPU 32, memory section 33, and a communication section (not illustrated). Control device 31 is configured as a microprocessor centered on CPU 32. Control device 31 outputs a drive signal to driving section 24, and inputs a detection signal from radio wave sensor 25. Memory section 33 is configured as a large-capacity memory apparatus such as an HDD, for example. As shown in Fig. 3, memory section 33 memorizes mode setting information 34 and selection information 35. Mode setting information 34 is information used to set an operation mode for controlling workpiece working apparatus 20. The operation mode of workpiece working apparatus 20 includes multiple modes for limiting the operation speed in order to improve the safety by suppressing contact with the moving object such as the operator, for example. This operation mode is a mode set in accordance with the distance to the moving object and the speed of the moving object, and includes a normal mode, a small-slow mode, a medium-slow mode, a large-slow mode, and a stop mode. The normal mode is a mode in which working section 21 is operated at the highest operation speed. The small-slow mode is a mode in which working section 21 is operated at a first operation speed slower than the operation in the normal mode. The medium-slow mode is a mode in which working section 21 is operated at a second operation speed slower than the operation in the small-slow mode. The large-slow mode is a mode in which working section 21 is operated at a third operation speed slower than the operation in the medium-slow mode. The stop mode is a mode in which the operation of working section 21 is stopped.

In mode setting information 34, the type of each signal is associated with any of the modes set to the executing mode in accordance with patterns 1 to 4 of the output signal from radio wave sensor 25. In mode setting information 34, the operation mode that tends to be slow is set to the executing mode in a case in which the distance value acquired from radio wave sensor 25 is short, and the operation mode that tends to be slow is set to the executing mode in a case in which the speed value acquired from radio wave sensor 25 is high. It should be noted that the expression "set to a slow tendency" is intended to allow a part of the region in which the speed does not change, and is set to be slow as a whole. In mode setting information 34, for example, in correspondence information of pattern 1, no signal or signals of two channels of speed and two channels of distance are associated with any operation mode among the normal mode, the small-slow mode, the medium-slow mode, the large-slow mode, and the stop mode. In correspondence information of pattern 2, no signal or a signal of four channels of distance is associated with any operation mode among the normal mode, the small-slow mode, the medium-slow mode, the large-slow mode, and the stop mode. **In** correspondence information of pattern 3, no signal or signals of three channels of distance and one channel of speed are associated with any operation mode among the normal mode, the small-slow mode, the medium-slow mode, the large-slow mode, and the stop mode. In correspondence information of pattern 4, no signal or signals of one channel of distance and three channels of speed are associated with any operation mode among the normal mode, the small-slow mode, the medium-slow mode, the large-slow mode, and the stop mode. Specific setting of the executing mode by using mode setting information 34 will be described below in detail. Selection information 35 includes the type of the signal pattern output from radio wave sensor 25. Selection information 35 includes a pattern selected by the operator in advance from patterns 1 to 4.

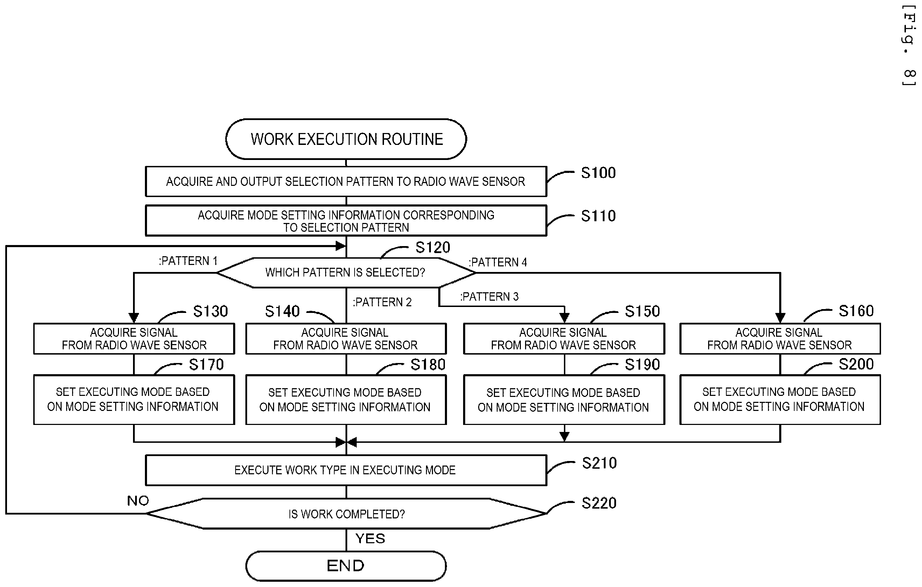

Hereinafter, processing of workpiece working system 10 configured as described above, in particular, processing of the work performed by working section 21 while automatically setting the operation mode will be described. First, before executing this processing, the operator selects in advance a pattern of an output signal from radio wave sensor 25. Control device 31 memorizes the selected pattern in selection information 35. Here, a case in which pattern 1 is memorized in selection information 35 will be mainly described (see Fig. 3). Fig. 8 is a flowchart showing an example of an operation execution routine executed by CPU 32 of control device 31. This routine is memorized in memory section 33 and executed by a start instruction from the operator. In a case in which this routine is started, CPU 32 reads out and acquires the selected pattern from selection information 35, and outputs the pattern to radio wave sensor 25 (S100). Radio wave sensor 25 which receives the output pattern switches a detection condition such that the signal is output in the selected pattern. Next, CPU 32 reads out and acquires mode setting information 34 which corresponds to the selection pattern (S110). Here, for example, correspondence information which corresponds to selected pattern 1 is acquired. Next, CPU 32 determines which pattern is selected (S120), acquires the signals (distance information and speed information) from radio wave sensor 25 in accordance with the selected pattern (S130 to S160), and sets the executing mode based on mode setting information 34 and the acquired signal (S170 to S200).

In a case in which pattern 1 is selected in S120, CPU 32 sets one mode included in the operation modes to the executing mode based on the correspondence information of pattern 1 included in mode setting information 34 and the signals of two channels of distance and two channels of speed from radio wave sensor 25 (S130 and S170). For example, in the correspondence information of pattern 1, as shown in Fig. 3, in a case in which the signal of the distance and the signal of the speed are not acquired from radio wave sensor 25, or in a case in which the signal of the distance is not acquired and the signal of first speed range S1 is acquired, CPU 32 determines that there is no contact between the moving object and working section 21 and sets the normal mode to the executing mode. In addition, in a case in which the signal of the distance is not acquired and the signal of second speed range S2 is acquired from radio wave sensor 25, or in a case in which the acquired signal is in first distance range A1 and the signal of the speed is not acquired, CPU 32 sets the small-slow mode in which the operation speed of working section 21 is made slightly low to the executing mode. Similarly, CPU 32 sets the medium-slow mode in a case in which the signal acquired from radio wave sensor 25 is in first distance range A1 and first speed range S1, and sets the large-slow mode to the executing mode in a case in which the signal is in first distance range A1 and second speed range S2. In addition, in a case in which the signal acquired from radio wave sensor 25 is in second distance range A2, CPU 32 sets the stop mode to the executing mode in order to prevent the contact between the moving object and working section 21 regardless of the signal of the speed.

In a case in which pattern 2 is selected in S120, CPU 32 sets one mode included in the operation modes to the executing mode based on the correspondence information of pattern 2 included in mode setting information 34 and the signal of four channels of distance from radio wave sensor 25 (S140 and S180). For example, in the correspondence information of pattern 2, in a case in which the signal of the distance is not acquired from radio wave sensor 25, CPU 32 sets the normal mode to the executing mode. In addition, CPU 32 sets the small-slow mode in which the operation speed of working section 21 is made slightly low to the executing mode in a case in which the acquired signal is in first distance range A1, sets the medium-slow mode in which the operation speed of working section 21 is made low in medium degree to the executing mode in a case in which the acquired signal is in second distance range A2, sets the large-slow mode in which the operation speed of working section 21 is made greatly low to the executing mode in a case in which the acquired signal is in third distance range A3, and sets the stop mode in which the operation of working section 21 is stopped to the executing mode in a case in which the acquired signal is in fourth distance range A4.

In a case in which pattern 3 is selected in S120, CPU 32 sets one mode included in the operation modes to the executing mode based on the correspondence information of pattern 3 included in mode setting information 34 and the signals of three channels of distance and one channel of speed from radio wave sensor 25 (S150 and S190). In the correspondence information of pattern 3, in a case in which the signal of the distance and the signal of the speed are not acquired from radio wave sensor 25, or in a case in which the signal of the distance is not acquired and the signal of first speed range S1 is acquired, CPU 32 determines that there is no contact between the moving object and working section 21 and sets the normal mode to the executing mode (see Fig. 6). In the correspondence information of pattern 3, in a case in which the acquired signal is in first distance range A1 and the signal of the speed is not acquired, or in a case in which the signals of first distance range A1 and first speed range S1 are acquired, the small-slow mode in which the operation speed of working section 21 is made slightly low is set to the executing mode. In the correspondence information of pattern 3, the medium-slow mode is set in a case in which the signal acquired from radio wave sensor 25 is in second distance range A2 and the signal of the speed is not acquired, and the large-slow mode is set to the executing mode in a case in which the signal is in second distance range A2 in a case in which the acquired signals are in second distance range A2 and second speed range S2. Further, in the correspondence information of pattern 3, in a case in which the signal acquired from radio wave sensor 25 is in third distance range A3, the stop mode is set to the executing mode in order to prevent the contact between the moving object and working section 21 regardless of the signal of the speed.

In a case in which pattern 4 is selected in S120, CPU 32 sets one mode included in the operation modes to the executing mode based on the correspondence information of pattern 4 included in mode setting information 34 and the signals of one channel of distance and three channels of speed from radio wave sensor 25 (S160 and S200). In the correspondence information of pattern 4, in a case in which the signal of the distance and the signal of the speed are not acquired from radio wave sensor 25, CPU 32 determines that there is no contact between the moving object and working section 21 and sets the normal mode to the executing mode. In addition, in a case in which the signal of the distance is not acquired from radio wave sensor 25 and the signal of first speed range S1 is acquired, CPU 32 sets the small-slow mode in which the operation speed of working section 21 is made slightly low to the executing mode. Similarly, CPU 32 sets the medium-slow mode in a case in which the signal of the distance is not acquired from radio wave sensor 25 and the signal of second speed range S2 is acquired, and sets the large-slow mode to the executing mode in a case in which the signal of the distance is not acquired and the signal of third speed range S3 is acquired. Further, in a case in which the signal acquired from radio wave sensor 25 is in first distance range A1, CPU 32 sets the stop mode to the executing mode in order to prevent the contact between the moving object and working section 21 regardless of the signal of the speed.

In a case in which the executing mode is set in S170 to S200, CPU 32 causes working section 21 to execute a predetermined work using the set executing mode (S210). For example, workpiece working apparatus 20 executes the work of picking up workpiece W at the pick-up position, moving and placing workpiece W to the disposition position. In this case, for example, in a case in which the output signal of radio wave sensor 25 is in patterns 1 to 4, as shown in Figs. 4 to 7, CPU 32 makes the operation speed of working section 21 slower in a case in which the moving speed is high in a case in which the moving object is in the same area, and makes the operation speed of working section 21 slower in a case in which the moving object is in a closer area even in a case in which the moving speed of the moving object is the same. In addition, in a case in which the moving object enters the area closest to radio wave sensor 25, CPU 32 stops the operation of working section 21 and ensures the safety in order to prevent contact with working section 21. After S210, CPU 32 determines whether the work of working section 21 is completed (S220), and executes the processing in and after S120 in a case in which the work is not completed. That is, the signal corresponding to the selected pattern is acquired, the executing mode is set in accordance with the distance and speed of the moving object in accordance with the signal, and working section 21 is caused to operate in the set executing mode. On the other hand, in a case in which the work of working section 21 is completed in S220, the routine ends.

Here, the correspondence relationship between the constituent elements in the present embodiment and the constituent elements in the present invention will be clarified. Working section 21 of the present embodiment corresponds to the working section of the present disclosure, workpiece working apparatus 20 corresponds to the workpiece working apparatus, control device 31 corresponds to the control device, and CPU 32 corresponds to the control section. Further, the normal mode and the stop mode of the present embodiment correspond to the normal mode and the stop mode of the present disclosure, and the small-slow mode, the medium-slow mode, and the large-slow mode correspond to any of the first mode, the second mode, and the third mode on the premise that the relationship in the speed order is maintained. In the present embodiment, an example of the control method of the present disclosure is also clarified by explaining the operation of control device 31.

In control device 31 of the present embodiment described above, the executing mode of working section 21 is set based on the distance information between the moving object (for example, operator) that is present outside workpiece working apparatus 20 and working section 21 and the speed information of the moving object moves toward working section 21, which are acquired from radio wave sensor 25. That is, in workpiece working apparatus 20, the operation mode of working section 21 is set also in consideration of the speed of the moving object. For example, in the moving object, in a case in which the speed thereof is low, there is a time until contact with working section 21, but in a case in which the speed thereof is high, the time required for contact with working section 21 is short. In control device 31, the operation mode is set in consideration of such a speed, and thus more appropriate control compatible with both the safety and the efficiency can be performed. Further, control device 31 sets the operation mode which tends to be slow to the executing mode in a case in which the distance information acquired from radio wave sensor 25 is shorter, and sets the operation mode which tends to be slow to the executing mode in a case in which the speed information acquired from radio wave sensor 25 is high. In control device 31, the operation of working section 21 tends to be made low in a situation in which the moving object is likely to contact working section 21, and thus more appropriate control compatible with both the safety and the efficiency can be performed.

In addition, in pattern 1, control device 31 sets the medium-slow mode slower than the normal mode to the executing mode in a case in which the signals of first distance range A1 and first speed range S1 are acquired from radio wave sensor 25, sets the large-slow mode slower than the medium-slow mode to the executing mode in a case in which the signals of first distance range A1 and the signals of second speed range S2 are acquired, and sets the stop mode to the executing mode in a case in which the signal of second distance range A2 is acquired. In control device 31, a more appropriate operation mode can be set in accordance with the signal value from radio wave sensor 25. In addition, in pattern 2, control device 31 sets the normal mode to the executing mode in a case in which the signal is not acquired from radio wave sensor 25, sets the small-slow mode to the executing mode in a case in which the signal of first distance range A1 is acquired, sets the medium-slow mode to the executing mode in a case in which the signal of second distance range A2 is acquired, sets the large-slow mode to the executing mode in a case in which the signal of third distance range A3 is acquired, and sets the stop mode to the executing mode in a case in which the signal of fourth distance range A4 is acquired. In control device 31, a more appropriate operation mode can be set in accordance with the signal value from radio wave sensor 25. Further, in pattern 3, control device 31 sets the small-slow mode to the executing mode in a case in which the signal values of first distance range A1 and first speed range S1 are acquired from radio wave sensor 25, sets the medium-slow mode to the executing mode in a case in which the signal of first speed range S1 is not acquired and second distance range A2 is acquired, sets the large-slow mode to the executing mode in a case in which the signals of second distance range A2 and first speed range S1 are acquired, and sets the stop mode to the executing mode in a case in which the signal of third distance range A3 is acquired. In control device 31, a more appropriate operation mode can be set in accordance with the signal value from radio wave sensor 25. Furthermore, in pattern 4, control device 31 sets the small-slow mode to the executing mode in a case in which the signal of first distance range A1 is not acquired from radio wave sensor 25 and the signal of first speed range S1 is acquired, sets the medium-slow mode to the executing mode in a case in which the signal of first distance range A1 is not acquired and the signal of second speed range S2 is acquired, sets the large-slow mode to the executing mode in a case in which the signal of first distance range A1 is not acquired and the signal of third speed range S3 is acquired, and sets the stop mode to the executing mode in a case in which the signal of first distance range A1 is acquired. In control device 31, a more appropriate operation mode can be set in accordance with the signal value from radio wave sensor 25.

Further, in patterns 2 and 3, control device 31 sets the normal mode to the executing mode in a case in which the moving object is not present within first distance range A1. In control device 31, the operation is performed at a high speed in a case in which the moving object is not present, and thus decreasing in the efficiency can be further suppressed. Further, in pattern 2, since the channel of speed of pattern 1 is replaced with the channel of distance to have more level, the user can perform selection, in control device 31, the distance and the speed can be used or more multi-level distance can be selected, more detailed operation mode is set, and thus more appropriate control compatible with both the safety and the efficiency can be performed.

Needless to say, the present disclosure is not limited to the present embodiment that has been described heretofore, and hence, the present disclosure can be carried out in various forms without departing from the technical scope of the present disclosure.

For example, in the embodiment described above, patterns 1 to 4 can be selected, but any one or more of patterns 2 to 4 may be omitted, or a pattern other than patterns 1 to 4 may be adopted, such as a pattern of four channels of speed. Since control device 31 sets the executing mode based on the distance and the speed of the moving object as long as at least pattern 1 can be used, more appropriate control compatible with both the safety and the efficiency can be performed.

**In** the embodiment described above, in patterns 1 to 4 of mode setting information 34, the operation mode which corresponds to the distance range and the speed range is appropriately set, but the setting of the operation mode is not limited to those shown in patterns 1 to 4. For example, in pattern 1 of mode setting information 34, in the case in which there is no distance signal and the signal of second speed range S2 is acquired, the small-slow mode is set to the executing mode, but the normal mode or the medium-slow mode may be set to the executing mode. Similarly, in pattern 1, in the case in which the signals of first distance range A1 and first speed range S1 are acquired, the medium-slow mode is set to the executing mode, but the small-slow mode or the large-slow mode may be set to the executing mode. In mode setting information 34, the operation mode which tends to be slow need only be set to the executing mode in a case in which the distance value acquired from radio wave sensor 25 is shorter, and the operation mode which tends to be slow need only be set to the executing mode in a case in which the speed value acquired from radio wave sensor 25 is high. In the embodiment described above, the small-slow mode, the medium-slow mode, and the large-slow mode are used, but the present invention is not limited to this. Any one or two of these operation modes may be omitted, or one or more operation modes may be further added. Also in control device 31, since the executing mode is set based on the distance and the speed of the moving object, more appropriate control compatible with the safety and the efficiency can be performed.

In the embodiment described above, workpiece working apparatus 20 is mainly described as the apparatus that performs the moving work of workpiece W, but the present invention is not particularly limited to this, and workpiece working apparatus 20 may perform various works as long as the working section that executes a predetermined work on workpiece W is provided. For example, workpiece working apparatus 20 is mainly described as the apparatus that perform movement from the pick-up position to the disposition position, but the apparatus may perform an assembling work of assembling a component, a processing work of performing processing, an application work of applying the viscous material, heating work of heating, a processing work of performing predetermined chemical and/or physical processing, and an inspection work of performing inspection. Further, although workpiece working apparatus 20 is the arm robot which includes articulated arm 22, the present invention is not particularly limited to this, and the workpiece working apparatus may be the automated guided vehicle (AGV) for transferring the workpiece. In the embodiment described above, articulated arm 22 is used as the working section, but the automated guided vehicle itself may be used as the working section, or the conveyance section that takes in and out the conveyed object, which is provided in the automated guided vehicle may be used as the working section. Further, examples of workpiece W may include various components such as a mechanical component, an electrical component, an electronic component, and a chemical component, as well as foods, biotechnology, and biological-related articles.

In the embodiment described above, control device 31 is described as control PC 30 which is connected to the outside of workpiece working apparatus 20, but the present invention is not particularly limited to this, and, for example, the controller provided in workpiece working apparatus 20 may be control device 31.

Here, the control device of the present disclosure may be configured as follows. For example, in the control device of the present disclosure, the control section may be configured to set the operation mode which tends to be slow to the executing mode in a case in which the distance information acquired from the radio wave sensor is short, and set the operation mode which tends to be slow to the executing mode in a case in which the speed information acquired from the radio wave sensor is high. In this control device, the operation of the working section tends to be low in a situation in which the moving object is likely to contact the working section, and thus more appropriate control compatible with both the safety and the efficiency can be performed.

In the control device of the present disclosure, the control section may be configured to acquire the detection values of the first distance range and the second distance range shorter than a first distance as the distance information, acquire the detection values of the first speed range and the second speed range faster than a first speed as the speed information, and set the executing mode of the working section based on the acquired detection values from any one or more of (1) to (3) as follows. In this control device, a more appropriate operation mode can be set in accordance with the detection value from the radio wave sensor.
(1) In a case in which the detection values of the first distance range and the first speed range are acquired from the radio wave sensor, the first mode is set to the executing mode.
(2) In a case in which the detection values of the first distance range and the second speed range are acquired from the radio wave sensor, the second mode is set to the executing mode.
(3) In a case in which the detection value of the second distance range is acquired from the radio wave sensor, the stop mode is set to the executing mode.

In the control device of the present disclosure, the operation mode further includes the third mode in which the working section is operated in the operation slower than the operation in the second mode, and the control section may be configured to acquire the detection values of the first distance range, the second distance range shorter than the first distance, and the third distance range shorter than a second distance as the distance information, acquire the detection value of the first speed range as the speed information, and set the executing mode of the working section based on the acquired detection values from any one or more of (4) to (7) as follows. In this control device, a more appropriate operation mode can be set in accordance with the detection value from the radio wave sensor.
(4) In a case in which the detection values of the first distance range and the first speed range are acquired from the radio wave sensor, the first mode is set to the executing mode.
(5) In a case in which the detection value of the first speed range is not acquired from the radio wave sensor and the detection value of the second distance range is acquired, the second mode is set to the executing mode.
(6) In a case in which the detection values of the second distance range and the first speed range are acquired from the radio wave sensor, the third mode is set to the executing mode.
(7) In a case in which a detection value of the third distance range is acquired from the radio wave sensor, the stop mode is set to the executing mode.

In the control device of the present disclosure, the operation mode further includes the third mode in which the working section is operated in the operation slower than the operation in the second mode, and the control section may be configured to acquire the detection values of the first distance range as the distance information, acquire the detection value of the first speed range, the detection value of the second speed range faster than the first speed, and the detection value of the third speed range faster than a second speed as the speed information, and set the executing mode of the working section based on the acquired detection values from any one or more of (8) to (11) as follows. In this control device, a more appropriate operation mode can be set in accordance with the detection value from the radio wave sensor.
(8) In a case in which the detection value of the first distance range is not acquired from the radio wave sensor and the detection value of the first speed range is acquired, the first mode is set to the executing mode.
(9) In a case in which the detection value of the first distance range is not acquired from the radio wave sensor and the detection value of the second speed range is acquired, the second mode is set to the executing mode.
(10) In a case in which the detection value of the first distance range is not acquired from the radio wave sensor and the detection value of the third speed range is acquired, the third mode is set to the executing mode.
(11) In a case in which the detection value of the first distance range is acquired from the radio wave sensor, the stop mode is set to the executing mode.

In the control device of the present disclosure, the control section may be configured to set the normal mode in which the working section is operated in the normal operation faster than the operation in the first mode in a case in which the moving object is not present within the predetermined first distance range based on the detection value from the radio wave sensor to the executing mode of the working section. In this control device, the operation is performed at a high speed in a case in which the moving object is not present, and thus decreasing in the efficiency can be further suppressed.

In the control device of the present disclosure, selection information selected by a user as to whether distance speed information including the distance information and the speed information is acquired from the radio wave sensor or multi-level distance information in which the speed information in the distance speed information is replaced with the distance information to have multi-levels is acquired from the radio wave sensor may be provided, and the control section may be configured to, in a case in which the multi-level distance information is selected, use the operation mode including different speeds in multi-levels than a case in which the distance speed information is acquired to the executing mode. In control device, the distance and the speed can be used or more multi-level distance can be selected, more detailed operation mode is set, and thus more appropriate control compatible with both the safety and the efficiency can be performed.

In the control device using multi-level distance information, the operation mode may further include the third mode in which the working section is operated in the operation slower than the operation in the second mode, and the control section may be configured to acquire the detection values of the first distance range, the second distance range shorter than the first distance, the third distance range shorter than the second distance, and the fourth distance range shorter than the third distance as the distance information, and set the executing mode of the working section based on the acquired detection values from any one or more of (12) to (15) as follows. In this control device, a more appropriate operation mode can be set in accordance with the detection value from the radio wave sensor.
(12) In a case in which the detection value of the first distance range is acquired from the radio wave sensor, the first mode is set to the executing mode.
(13) In a case in which the detection value of the second distance range is acquired from the radio wave sensor, the second mode is set to the executing mode.
(14) In a case in which the detection value of the third distance range is acquired from the radio wave sensor, the third mode is set to the executing mode.
(15) In a case in which the detection value of the fourth distance range is acquired from the radio wave sensor, the stop mode is set to the executing mode.

A workpiece working apparatus of the present disclosure includes a working section configured to execute a predetermined work on a workpiece, a radio wave sensor configured to detect distance information between a moving object that is present outside the workpiece working apparatus and the working section and speed information of the moving object which moves toward the working section, and any of the control devices described above. Since the workpiece working apparatus includes any of the control devices described above, the same effect as the control device can be obtained.

A workpiece working system of the present disclosure includes a workpiece working apparatus including a working section configured to execute a predetermined work on a workpiece and a radio wave sensor configured to detect distance information between a moving object that is present outside the workpiece working apparatus and the working section and speed information of the moving object which moves toward the working section, and any of the control device described above. The workpiece working system includes any of the control devices described above, and thus it is possible to obtain the same effect as the control device.

A control method of the present disclosure is a control method used in a workpiece working apparatus that includes a working section configured to execute a predetermined work on a workpiece and has operation modes including a first mode in which the working section is operated in a first operation, a second mode in which the working section is operated in a second operation slower than the operation in the first mode, and a stop mode in which the operation of the working section is stopped, the method including a step of acquiring, from a radio wave sensor, distance information between a moving object that is present outside the workpiece working apparatus and the working section and speed information of the moving object which moves toward the working section, and setting an executing mode of the working section from the operation modes based on the distance information and the speed information which are acquired.

In this control method, similarly to the control device described above, the operation mode is set in consideration of the speed, and thus appropriate control compatible with both the safety and the efficiency can be performed. This control method may adopt any of the aspects of the control device described above, or may include a step of expressing the function of any of the control devices described above.

### Industrial Applicability

The control device, the workpiece working apparatus, the workpiece working system, and control method disclosed in the present description can be used in a technical field of an apparatus configured to execute a predetermined work on a workpiece.

### Reference Signs List

10: workpiece working system, 20: workpiece working apparatus, 21: working section, 22: articulated arm, 23: end effector, 24: driving section, 25: radio wave sensor, 30: control personal computer (PC), 31: control device, 32: CPU, 33: memory section, 34: mode setting information, 35: selection information, A1: first distance range, A2: second distance range, A3: third distance range, A4: fourth distance range, S1: first speed range, S2: second speed range, S3: third speed range, W: workpiece

## Claims

1. A control device (31) configured to be used in a workpiece working apparatus (20) that includes a working section (21) configured to execute a predetermined work on a workpiece (W) and has operation modes including a first mode in which the working section is operated in a first operation, a second mode in which the working section is operated in a second operation slower than the operation in the first mode, and a stop mode in which the operation of the working section is stopped, the control device comprising:
a control section
**characterized by** the control section configured to:
- acquire selection information (35) including a pattern selected by a user among a plurality of patterns which associate distance information and speed information with one of the operation modes;
- acquire, from a radio wave sensor (25) according to the selected pattern,
o detection values, as the distance information between a moving object (S1) being provided outside the workpiece working apparatus and the working section, of a first distance range and a second distance range shorter than a first distance as the distance information; and
o detection values, as the speed information of the moving object moving toward the working section, of a first speed range and a second speed range faster than a first speed,
- set an executing mode of the working section based on the acquired detection values and the selected pattern from any one or more of 1) to 3) as follows:
1) in a case in which the detection values of the first distance range and the first speed range are acquired, the first mode is set to the executing mode,
2) in a case in which the detection values of the first distance range and the second speed range are acquired, the second mode is set to the executing mode, and
3) in a case in which the detection value of the second distance range is acquired, the stop mode is set to the executing mode.

2. The control device according to claim 1, wherein
the control section is configured to set a normal mode in which the working section is operated in a normal operation faster than the operation in the first mode to the executing mode of the working section in a case in which the moving object is not present within a predetermined first distance range based on the detection values.

3. The control device according to any one of claims 1 to 2, wherein
the selected pattern determines whether the radio wave sensor acquires:
- the detection values as distance-speed information including the distance information and the speed information; or
- the detection values as multi-level distance information being information including for each of the multi-level a different distance range and the speed information being excluded, and
the control section is configured to use, in a case in which the selected pattern corresponds to the multi-level distance information, the operation mode including different speeds in multi-levels, each speed associated with the respective distance range of the multi-level distance information, as the executing mode.

4. A workpiece working apparatus (20) comprising:
a working section (21) configured to execute a predetermined work on a workpiece (W);
a radio wave sensor (25) configured to detect:
- distance information between a moving object that is present outside the workpiece working apparatus and the working section and
- speed information of the moving object which moves toward the working section; and the control device according to any one of claims 1 to 3.

5. A workpiece working system (10) comprising:
a workpiece working apparatus (20) including a working section (21) configured to execute a predetermined work on a workpiece (W), and a radio wave sensor (25) configured to detect
- distance information between a moving object (S1) that is present outside the workpiece working apparatus and the working section and
- speed information of the moving object which moves toward the working section; and
the control device according to any one of claims 1 to 3.

6. A control method, which is used in a workpiece working apparatus (20) that includes a working section (21) configured to execute a predetermined work on a workpiece (W) and has operation modes including a first mode in which the working section is operated in a first operation, a second mode in which the working section is operated in a second operation slower than the operation in the first mode, and a stop mode in which the operation of the working section is stopped, the control method comprising steps of
acquiring (S100) selection information (35) including a pattern selected by a user among a plurality of patterns which associate distance information and speed information with one of the operation modes
acquiring (S130; S140; S150; S160), from a radio wave sensor (25), according to the selected pattern
- detection values, as the distance information between a moving object (S1) being provided outside the workpiece working apparatus and the working section, of a first distance range and a second distance range shorter than a first distance as the distance information; and
- detection values, as the speed information of the moving object moving toward the working section, of a first speed range and a second speed range faster than a first speed, and
setting (S170; S180; S190; S200) an executing mode of the working section based on the acquired detection values and the selected pattern from any one or more of 1) to 3) as follows:
1) in a case in which the detection values of the first distance range and the first speed range are acquired, the first mode is set to the executing mode,
2) in a case in which the detection values of the first distance range and the second speed range are acquired, the second mode is set to the executing mode, and
3) in a case in which the detection value of the second distance range is acquired, the stop mode is set to the executing mode.

## Patentansprüche

1. Steuerungsvorrichtung (31), die zum Einsatz in einer Werkstück-Bearbeitungsvorrichtung (20) ausgeführt ist, die einen Bearbeitungsabschnitt (21) aufweist, der zum Durchführen einer vorgegebenen Bearbeitung an einem Werkstück (W) ausgeführt ist und Betriebsmodi aufweist, die einen ersten Modus, in dem der Bearbeitungsabschnitt in einem ersten Betrieb betätigt wird, einen zweiten Modus, in dem der Bearbeitungsabschnitt in einem zweiten Betrieb betätigt wird, der langsamer ist als der Betrieb in dem ersten Modus, sowie einen Ruhe-Modus einschließt, in dem der Betrieb des Bearbeitungsabschnitts ruht, wobei die Steuerungsvorrichtung umfasst:
einen Steuerungsabschnitt,
**dadurch gekennzeichnet, dass** der Steuerungsabschnitt konfiguriert ist zum:
- Beziehen von Auswahl-Informationen (35), die ein Muster einschließen, das von einem Benutzer aus einer Vielzahl von Mustern ausgewählt wird, die Abstands-Informationen und Geschwindigkeits-Informationen mit einem der Betriebsmodi verknüpfen;
- Beziehen folgender Werte von einem Funkwellen-Sensor (25) entsprechend dem ausgewählten Muster,
o Erfassungswerte als die Informationen über Abstand zwischen einem sich bewegenden Objekt (S1), das sich außerhalb der Werkstück-Bearbeitungsvorrichtung befindet, und dem Bearbeitungsabschnitt eines ersten Abstandsbereiches sowie eines zweiten Abstandsbereiches, der kürzer ist als ein erster Abstand, als die Abstands-Informationen; und
o Erfassungswerte als die Informationen über Geschwindigkeit des sich bewegenden Objektes, das sich auf den Bearbeitungsabschnitt zu bewegt, eines ersten Bereiches von Geschwindigkeit und eines zweiten Bereiches von Geschwindigkeit, die höher ist als eine erste Geschwindigkeit,
- Festlegen eines Ausführungsmodus des Bearbeitungsabschnitts auf Basis der bezogenen Erfassungswerte sowie des ausgewählten Musters aus einem oder mehreren gemäß Ziffer 1) bis 3) wie folgt:
1) der erste Modus wird als der Ausführungsmodus festgelegt, wenn die Erfassungswerte des ersten Abstandsbereiches sowie des ersten Geschwindigkeitsbereiches bezogen werden,
2) der zweite Modus wird als der Ausführungsmodus festgelegt, wenn die Erfassungswerte des ersten Abstandsbereiches sowie des zweiten Geschwindigkeitsbereiches bezogen werden; und
3) der Ruhe-Modus wird als der Ausführungsmodus festgelegt, wenn der Erfassungswert des zweiten Abstandsbereiches bezogen wird.

2. Steuerungsvorrichtung nach Anspruch 1, wobei
der Steuerungsabschnitt so ausgeführt ist, dass er einen normalen Modus, indem der Bearbeitungsabschnitt in einem normalen Betrieb betätigt wird, der schneller ist als der Betrieb in dem ersten Modus, als den Ausführungsmodus des Bearbeitungsabschnitts festlegt, wenn sich das sich bewegende Objekt auf Basis der Erfassungswerte nicht innerhalb eines vorgegebenen ersten Abstandsbereiches befindet.

3. Steuerungsvorrichtung nach einem der Ansprüche 1 bis 2, wobei
das ausgewählte Muster bestimmt, ob der Funkwellen-Sensor erfasst:
- die Erfassungswerte als Abstands-Geschwindigkeits-Informationen, die die Abstands-Informationen und die Geschwindigkeits-Informationen einschließen; oder
- die Erfassungswerte als mehrstufige Abstands-Informationen, die Informationen sind, die für jede der mehreren Stufen einen anderen Abstandsbereich einschließen, und wobei die Geschwindigkeits-Informationen ausgeschlossen sind, und
der Steuerungsabschnitt so ausgeführt ist, dass er, wenn das ausgewählte Muster den mehrstufigen Abstands-Informationen entspricht, den Betriebsmodus, der unterschiedliche Geschwindigkeiten in mehreren Stufen einschließt, als den Ausführungsmodus nutzt, wobei jede Geschwindigkeit mit dem jeweiligen Abstandsbereich der mehrstufigen Abstands-Informationen verknüpft ist.

4. Werkstück-Bearbeitungsvorrichtung (20), die umfasst:
einen Bearbeitungsabschnitt (21), der zum Durchführen einer vorgegebenen Bearbeitung an einem Werkstück (W) ausgeführt ist;
einen Funkwellen-Sensor (25), der so ausgeführt ist, dass er erfasst:
- Informationen über Abstand zwischen einem sich bewegenden Objekt, das sich außerhalb der Werkstück-Bearbeitungsvorrichtung befindet, und dem Bearbeitungsabschnitt; sowie
- Informationen über Geschwindigkeit des sich bewegenden Objektes, das sich auf den Bearbeitungsabschnitt zu bewegt; und
die Steuerungsvorrichtung nach einem der Ansprüche 1 bis 3.

5. Werkstück-Bearbeitungssystem (10), das umfasst:
eine Werkstück-Bearbeitungsvorrichtung (20), die einen Bearbeitungsabschnitt (21), der zum Durchführen einer vorgegebenen Bearbeitung an einem Werkstück (W) ausgeführt ist, sowie einen Funkwellen-Sensor (25) einschließt, der ausgeführt ist zum Erfassen von
- Informationen über Abstand zwischen einem sich bewegenden Objekt (S1), das sich außerhalb der Werkstück-Bearbeitungsvorrichtung befindet, und dem Bearbeitungsabschnitt; sowie
- Informationen über Geschwindigkeit des sich bewegenden Objektes, das sich auf den Bearbeitungsabschnitt zu bewegt; und
die Steuerungsvorrichtung nach einem der Ansprüche 1 bis 3.

6. Steuerungsverfahren, das in einer Werkstück-Bearbeitungsvorrichtung (20) zum Einsatz kommt, die einen Bearbeitungsabschnitt (21) aufweist, der zum Durchführen einer vorgegebenen Bearbeitung an einem Werkstück (W) ausgeführt ist und Betriebsmodi aufweist, die einen ersten Modus, in dem der Bearbeitungsabschnitt in einem ersten Betrieb betätigt wird, einen zweiten Modus, in dem der Bearbeitungsabschnitt in einem zweiten Betrieb betätigt wird, der langsamer ist als der Betrieb in dem ersten Modus, sowie einen Ruhe-Modus einschließt, in dem der Betrieb des Bearbeitungsabschnitts ruht, wobei das Steuerungsverfahren die folgenden Schritte umfasst:
Beziehen (S100) von Auswahl-Informationen (35), die ein Muster einschließen, das von einem Benutzer aus einer Vielzahl von Mustern ausgewählt wird, die Abstands-Informationen und Geschwindigkeits-Informationen mit einem der Betriebsmodi verknüpfen,
Beziehen (S130; S140; S150; S160) folgender Werte von einem Funkwellen-Sensor (25) entsprechend dem ausgewählten Muster,
o Erfassungswerte als die Informationen über Abstand zwischen einem sich bewegenden Objekt (S1), das sich außerhalb der Werkstück-Bearbeitungsvorrichtung befindet, und dem Bearbeitungsabschnitt eines ersten Abstandsbereiches und eines zweiten Abstandsbereiches, der kürzer ist als ein erster Abstand als die Abstands-Informationen; sowie
o Erfassungswerte als die Informationen über Geschwindigkeit des sich bewegenden Objektes, das sich auf den Bearbeitungsabschnitt zu bewegt, eines ersten Bereiches von Geschwindigkeit und eines zweiten Bereiches von Geschwindigkeit, die höher ist als eine erste Geschwindigkeit, und
Festlegen (S170; S180; S190; S200) eines Ausführungsmodus des Bearbeitungsabschnitts auf Basis der bezogenen Erfassungswerte sowie des ausgewählten Musters aus einem oder mehreren gemäß Ziffer 1) bis 3) wie folgt:
1) der erste Modus wird als der Ausführungsmodus festgelegt, wenn die Erfassungswerte des ersten Abstandsbereiches sowie des ersten Geschwindigkeitsbereiches bezogen werden,
2) der zweite Modus wird als der Ausführungsmodus festgelegt, wenn die Erfassungswerte des ersten Abstandsbereiches sowie des zweiten Geschwindigkeitsbereiches bezogen werden; und
3) der Ruhe-Modus wird als der Ausführungsmodus festgelegt, wenn der Erfassungswert des zweiten Abstandsbereiches bezogen wird.

## Revendications

1. Dispositif de commande (31) configuré pour être utilisé dans un appareil de travail de pièce (20) qui comprend une section de travail (21) configurée pour exécuter un travail prédéterminé sur une pièce (W) et a des modes de fonctionnement comprenant un premier mode dans lequel la section de travail fonctionne selon une première opération, un deuxième mode dans lequel la section de travail fonctionne selon une deuxième opération plus lente que l'opération dans le premier mode, et un mode d'arrêt dans lequel le fonctionnement de la section de travail est arrêté, le dispositif de commande comprenant :
une section de commande
**caractérisé en ce que** la section de commande est configurée pour :
- acquérir des informations de sélection (35) comprenant un motif sélectionné par un utilisateur parmi une pluralité de motifs qui associent des informations de distance et des informations de vitesse à l'un des modes de fonctionnement ;
- acquérir, à partir d'un capteur d'ondes radio (25) conformément au motif sélectionné,
o des valeurs de détection, comme étant les informations de distance entre un objet mobile (S1) qui est prévu à l'extérieur de l'appareil de travail de pièce et la section de travail, d'une première plage de distance et d'une deuxième plage de distance plus courte qu'une première distance, comme étant les informations de distance ; et
o des valeurs de détection, comme étant les informations de vitesse de l'objet mobile se déplaçant vers la section de travail, d'une première plage de vitesse et d'une deuxième plage de vitesse plus grande qu'une première vitesse,
- définir un mode d'exécution de la section de travail sur la base des valeurs de détection acquises et du motif sélectionné parmi l'un quelconque ou plusieurs des points 1) à 3) comme suit :
1) dans le cas où les valeurs de détection de la première plage de distance et de la première plage de vitesse sont acquises, le premier mode est défini comme mode d'exécution,
2) dans le cas où les valeurs de détection de la première plage de distance et de la deuxième plage de vitesse sont acquises, le deuxième mode est défini comme mode d'exécution, et
3) dans le cas où la valeur de détection de la deuxième plage de distance est acquise, le mode d'arrêt est défini comme mode d'exécution.

2. Dispositif de commande selon la revendication 1, dans lequel
la section de commande est configurée pour définir un mode normal, dans lequel la section de travail fonctionne selon une opération normale plus rapide que l'opération dans le premier mode, comme mode d'exécution de la section de travail, dans le cas où l'objet mobile n'est pas présent dans une première plage de distance prédéterminée, sur la base des valeurs de détection.

3. Dispositif de commande selon l'une quelconque des revendications 1 et 2, dans lequel
le motif sélectionné détermine si le capteur d'ondes radio acquiert :
- les valeurs de détection en tant qu'informations distance-vitesse comprenant les informations de distance et les informations de vitesse ; ou
- les valeurs de détection en tant qu'informations de distance à niveaux multiples, qui sont des informations comprenant, pour chacun des niveaux multiples, une plage de distance différente et les informations de vitesse qui sont exclues, et
la section de commande est configurée pour utiliser, dans le cas où le motif sélectionné correspond aux informations de distance à niveaux multiples, le mode de fonctionnement comprenant des vitesses différentes à niveaux multiples, chaque vitesse étant associée à la plage de distance correspondante des informations de distance à niveaux multiples, comme étant le mode d'exécution.

4. Appareil de travail de pièce (20) comprenant :
une section de travail (21) configurée pour exécuter un travail prédéterminé sur une pièce (W) ;
un capteur d'ondes radio (25) configuré pour détecter :
- des informations de distance entre un objet mobile qui est présent à l'extérieur de l'appareil de travail de pièce et la section de travail et
- des informations de vitesse de l'objet mobile qui se déplace vers la section de travail ; et
le dispositif de commande selon l'une quelconque des revendications 1 à 3.

5. Système de travail de pièce (10) comprenant :
un appareil de travail de pièce (20) comprenant une section de travail (21) configurée pour exécuter un travail prédéterminé sur une pièce (W), et un capteur d'ondes radio (25) configuré pour détecter
- des informations de distance entre un objet mobile (S1) qui est présent à l'extérieur de l'appareil de travail de pièce et la section de travail et
- des informations de vitesse de l'objet mobile qui se déplace vers la section de travail ; et
le dispositif de commande selon l'une quelconque des revendications 1 à 3.

6. Procédé de commande, qui est utilisé dans un appareil de travail de pièce (20) qui comprend une section de travail (21) configurée pour exécuter un travail prédéterminé sur une pièce (W) et a des modes de fonctionnement comprenant un premier mode dans lequel la section de travail fonctionne selon une première opération, un deuxième mode dans lequel la section de travail fonctionne selon une deuxième opération plus lente que l'opération dans le premier mode, et un mode d'arrêt dans lequel le fonctionnement de la section de travail est arrêté, le procédé de commande comprenant les étapes de
acquisition (S100) d'informations de sélection (35) comprenant un motif sélectionné par un utilisateur parmi une pluralité de motifs qui associent des informations de distance et des informations de vitesse à l'un des modes de fonctionnement
acquisition (S130 ; S140 ; S150 ; S160), à partir d'un capteur d'ondes radio (25), conformément au motif sélectionné
- de valeurs de détection, comme étant les informations de distance entre un objet mobile (S1) qui est prévu à l'extérieur de l'appareil de travail de pièce et la section de travail, d'une première plage de distance et d'une deuxième plage de distance plus courte qu'une première distance, comme étant les informations de distance ; et
- de valeurs de détection, comme étant les informations de vitesse de l'objet mobile qui se déplace vers la section de travail, d'une première plage de vitesse et d'une deuxième plage de vitesse plus grande qu'une première vitesse, et
définition (S170 ; S180 ; S190 ; S200) d'un mode d'exécution de la section de travail sur la base des valeurs de détection acquises et du motif sélectionné parmi l'un quelconque ou plusieurs des points 1) à 3) comme suit :
1) dans le cas où les valeurs de détection de la première plage de distance et de la première plage de vitesse sont acquises, le premier mode est défini comme mode d'exécution,
2) dans le cas où les valeurs de détection de la première plage de distance et de la deuxième plage de vitesse sont acquises, le deuxième mode est défini comme mode d'exécution, et
3) dans le cas où la valeur de détection de la deuxième plage de distance est acquise, le mode d'arrêt est défini comme mode d'exécution.
